**Europäisches Patentamt**

**European Patent Office**

**Office européen des brevets**

(19)

(11) Veröffentlichungsnummer: **0 415 005 A2**

# EUROPÄISCHE PATENTANMELDUNG

(12)

(21) Anmeldenummer: **90109795.6**

(22) Anmeldetag: **23.05.90**

(51) Int. Cl.5: **B60J 10/02**

(30) Priorität: **30.08.89 DE 8910340 U**

(43) Veröffentlichungstag der Anmeldung:
**06.03.91 Patentblatt 91/10**

(84) Benannte Vertragsstaaten:
**AT BE CH DE DK ES FR GB GR IT LI LU NL SE**

(71) Anmelder: **Hutchinson Gummiwarenfabrik GmbH**
**Hansastrasse 66**

**W-6800 Mannheim(DE)**

(72) Erfinder: **Welte, Manfred**
**Darmstädter Strasse 6**
**W-5842 Bürstadt-Bobstadt(DE)**

(74) Vertreter: **Ratzel, Gerhard, Dr.**
**Seckenheimer Strasse 36a**
**W-6800 Mannheim 1(DE)**

(54) **Elasticher Rahmen als Rückhaltevorsprung für KFZ-Fenster und dergleichen.**

(57) Die Erfindung betrifft einen elastischen Rahmen als Rückhaltevorsprung für KFZ-Fenster und dergleichen der als Leiste geformt ist und einen Karosserie-Spalt zur Aufnahme des Metallsteges aufweist, wobei der den Karosserie-Spalt bildende Körper aus elastischem Material besteht und einem entgegengesetzt orientierten versetzten Glaskanal zur Aufnahme der Glasscheibe, wobei der den Kanal bildende Körper mit mindestens teilweise mindestens in seinem außen gerichteten Teil aus hart-elastiscchem Material besteht und der Kanal in einem im Querschnitt U-hakenförmigen Körper angeordnet ist, der schlüssig in den Spalt bildenden Körper übergeht.

Fig.3

EP 0 415 005 A2

## ELASTISCHER RAHMEN ALS RÜCKHALTEVORSPRUNG FÜR KFZ-FENSTER UND DERGLEICHEN

Die Erfindung betrifft einen elastischen Rahmen als Rückhaltevorsprung für KFZ-Fenster und dergleichen.

Bei Kraftfahrzeugen werden zur elastischen und gleichzeitig dichten Verbindung von Metallkarosserie und Glasscheiben, Dichtungs- und Halteleisten aus Gummi, Kunststoff und dergleichen verwendet.

Diese Leisten dienen sowohl zur Halterung der Glasscheiben in der starren Karosserie, wie auch zur Abdichtung gegen Luftströmungseintritt und Feuchtigkeit sowie weiterhin zum Ausgleich von geringen Toleranzen zwischen Karosserie und Glasscheibe.

So beschreibt z. B. die zum Stand der Technik zu nennende FR-PS 25 56 438 eine mit zwei Rinnen zur Aufnahme von Glas-und Metallkante versehene selbstblockierende Dichtungsleiste. Die Dichtungs- und Halteleisten gemäß dem Stand der Technik weisen ein hohes Außenprofil auf, d. h. weit überstehende Wülste, welche ungünstige aerodynamische und Geräusch-Auswirkungen haben. Diese Wülste sind aus Stabilitätsgründen gemäß dem Stand der Technik erforderlich.

Die Dichtungs- und Halteleisten gemäß dem Stand der Technik weisen Nachteile bezüglich Aerodynamik, Strömungsgeräuschen, $C_w$-Wert und Montageaufwand auf.

Demgegenüber liegt vorliegender Erfindung die Aufgabe zugrunde, eine Dichtungs- und Halteleiste zu liefern, die ein flaches Außenprofil bietet, dicht, stabil, ausreichend elastisch ist und mit großer Rück-Haltekraft versehen ist.

Diese Aufgabe wird erfindungsgemäß bei einem elastischen Rahmen als Rückhaltevorsprung für KFZ-Fenster und dergleichen dadurch gelöst, daß er als Leiste geformt ist mit

a) einem Karosserie-Spalt (1) zur Aufnahme des Metallsteges(2),

wobei der den Karosserie-Spalt (1) bildende Körper aus elastischem Material besteht,

b) einem entgegengesetzt orientierten versetzten Glaskanal (3) zur Aufnahme der Glasscheibe (4),

wobei der den Kanal (3) bildende Körper (5) mindestens teilweise mindestens in seinem nach außen gerichteten Teil aus hart-elastischem Material besteht, und

der Kanal (3) in einem im Querschnitt U-hakenförmigen Körper (5) angeordnet ist,

der schlüssig in den den Spalt (1) bildenden Körper (6) übergeht.

Besondere Ausführungsformen sind in den Unteransprüchen 2 und 3 beansprucht.

Die erfindungsgemäße Dichtungs- und Halteleiste ist besonders geeignet zur Anwendung bei starren Kraftfahrzeug-Fenstern, d. h. bei Fenstern, deren Scheiben nicht bewegt werden oder die insgesamt mit dem Rahmen bewegt bzw. ausgestellt werden.

Es handelt sich um einen kraftschlüssigen Rückhaltevorsprung.

Es ist insbesondere angesichts der Eigensteifheit des glasaufnehmenden Teils des erfindungsgemäßen Rahmens möglich, auch Zierleisten zu verwenden.

Die Erfindung wird im folgenden anhand von Figuren in ihrem Wesen in beispielhafter Weise dargelegt, ohne daß diese Figuren als Beschränkung aufzufassen sind.

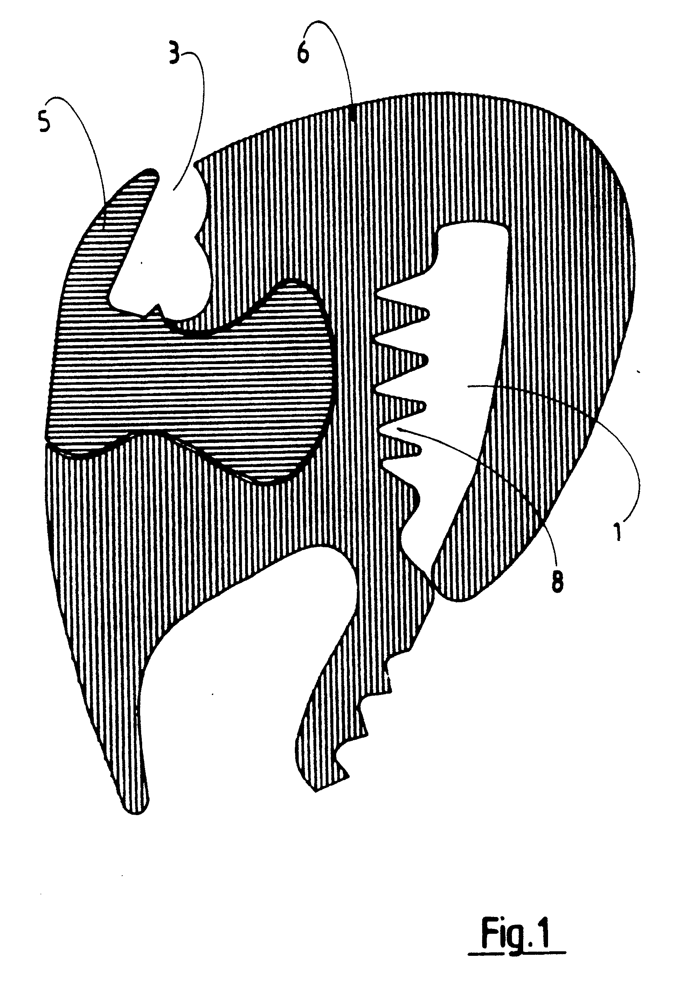

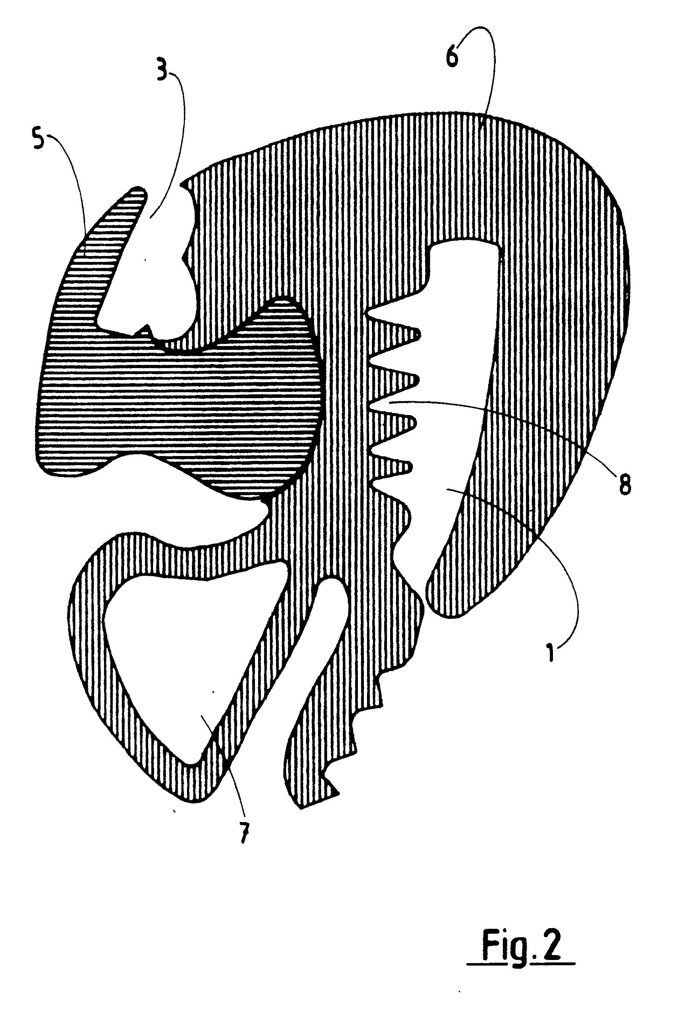

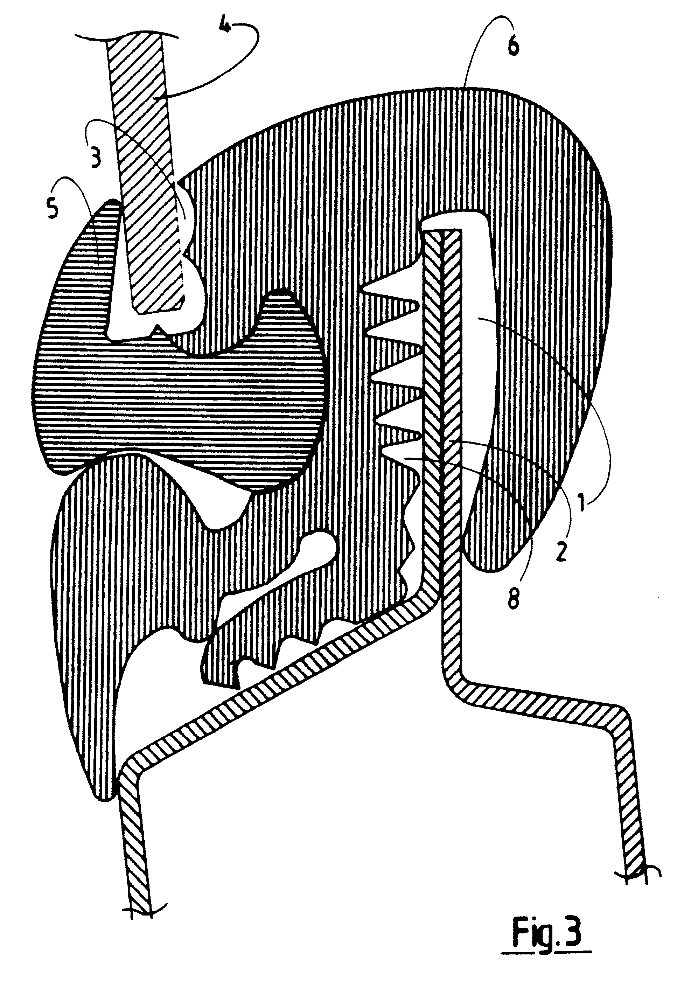

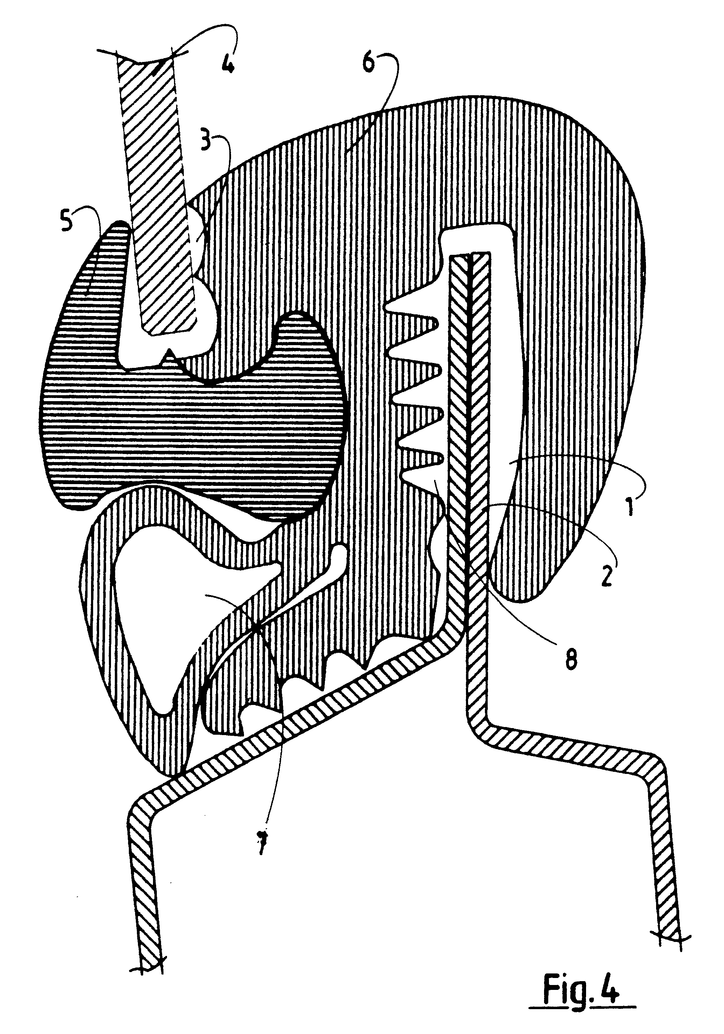

Die Figuren 1 bis 4 stellen Querschnitte durch erfindungsgemäße Ausführungsformen eines elastischen Rahmens, d. h. einer erfindungsgemäßen Dichtungs- und Halteleiste dar.

Figur 1 zeigt einen Karosseriespalt 1 und einen Glaskanal 3 in Körper 6 aus elastischem und Körper 5 aus hartelastischem Material.

Die Figur 2 zeigt Spalt 1 und Kanal 3 in Körpern 5 und 6, mit einem Hohlraum 7 und Aussparungen 8.

Die Figur 3 zeigt einen erfindungsgemäßen Rahmen mit Spalt 1, in dem der Metallsteg 2 angeordnet ist, mit Kanal 3 in dem die Glasscheibe 4 angeordnet ist, mit Körper 6 aus elastischem und Körper 5 aus hart-elastischem Material, sowie Aussparungen 8.

Aufgrund der Anordnung zwischen Metallsteg 2 und Glasscheibe 4, ist ein Teil des elastischen Körpers 6 in Anwendungsstellung verformt bzw. gepresst.

Die Figur 4 zeigt einen erfindungsgemäßen Rahmen mit Spalt 1, aufnehmend Metallsteg 2, mit Kanal 3, aufnehmend Glasscheibe 4, mit hartelastischem Körper 5 und weichelastischem Körper 6, sowie Hohlraum 7 und Aussparungen 8, wobei Teile des elastischen Körpers 6 in Anwendungsposition gepresst bzw. verformt sind.

## Ansprüche

1. Elastischer Rahmen als Rückhaltevorsprung für KFZ-Fenster und dergleichen,
dadurch gekennzeichnet,
daß er als Leiste geformt ist mit

a) einem Karosserie-Spalt (1) zur Aufnahme des Metallsteges(2),

wobei der den Karosserie-Spalt (1) bildende Körper aus elastischem Material besteht,

b) einem entgegengesetzt orientierten versetzten Glaskanal (3) zur Aufnahme der Glasscheibe (4),

wobei der den Kanal (3) bildende Körper (5) mindestens teilweise mindestens in seinem nach außen gerichteten Teil aus hart-elastischem Material besteht, und

der Kanal (3) in einem im Querschnitt U-hakenförmigen Körper (5) angeordnet ist,

der schlüssig in den den Spalt (1) bildenden Körper (6) übergeht.

2. Elastischer Rahmen als Rückhaltevorsprung für KFZ-Fenster und dergleichen nach Anspruch 1, dadurch gekennzeichnet,

daß der den Karosserie-Spalt (1) bildende Körper (6) Hohlräume (7) aufweist.

3. Elastischer Rahmen als Rückhaltevorsprung für KFZ-Fenster und dergleichen nach Ansprüchen 1 bis 2,

dadurch gekennzeichnet,

daß die Körper (5, 6) materialsparende Oberflächen-Aussparungen (8) aufweisen.

Fig.1

4

Fig.2

Fig.3

**Fig.4**